# EUROPÄISCHE PATENTSCHRIFT

(11) **EP 1 584 393 B1**
(45) Veröffentlichungstag und Bekanntmachung des Hinweises auf die Patenterteilung: **10.09.2008**
(21) Anmeldenummer: 04008300.8
(22) Anmeldetag: 06.04.2004
(51) Int. Cl.: B23F 23/12

(54) **Verfahren zum Abrichten einer im wesentlichen zylindrischen Schleifschnecke**
Method of dressing a substantially cylindrical grinding worm
Procédé pour le dressage d'une vis sans fin de meulage essentiellement cylindrique

(43) Veröffentlichungstag der Anmeldung: 12.10.2005
(73) Patentinhaber: THE GLEASON WORKS, Rochester, New York 14607-1282 (US)
(72) Erfinder: Reichert, Gerhard, 82216 Maisach (DE); Türich, Antoine, Dr.-Ing., 81475 München (DE)
(74) Vertreter: Kraus, Jürgen Helmut

(56) Entgegenhaltungen:
- DE-A- 10 220 513
- DE-C- 2 857 823
- US-A- 5 651 721

## Beschreibung

Die Erfindung betrifft ein Verfahren zum Abrichten einer im wesentlichen zylindrischen Schleifschnecke auf einer zum kontinuierlichen Wälzschleifen im Diagonalverfahren geeigneten Maschine, bei dem als Abrichtwerkzeug ein im wesentlichen zylindrisches Zahnrad, das auf der beim Abrichten wirksamen Oberfläche mit einem abrasiven Belag versehen ist, mit der Schleifschnecke in Eingriff gebracht und relativ zur Schleifschnecke in Achsrichtung derselben bewegt wird, um die Flanken der Schleifschnecke zu profilieren.

Zylindrische Schleifschnecken werden zum kontinuierlichen Wälzschleifen von Zahnrädern eingesetzt. Da die Schleifschnecke bei diesem Vorgang einer natürlichen Abnutzung ausgesetzt ist, muß diese von Zeit zu Zeit abgerichtet werden. Dabei wird mit dem Abrichtwerkzeug von den Flanken des Gewindeganges oder der Gewindegänge der Schleifschnecke Material abgetragen und der Außendurchmesser der Schnecke entsprechend dem radialen Zustellbetrag beim Flankenabrichten ebenfalls nachgesetzt.

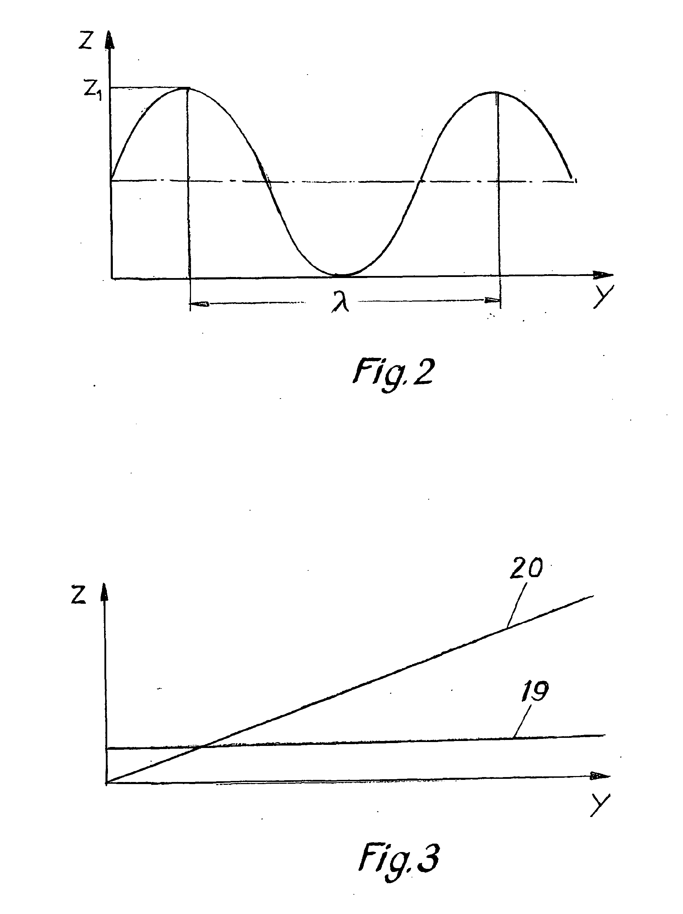

Ein Verfahren der eingangs genannten Art ist aus der DE 1022 513 A1 bekannt. Mit dem bekannten Verfahren läßt sich eine Schleifschnecke sowohl im Tangentialals auch im Diagonalverfahren abrichten. In beiden Fällen führt das zahnradartige Abrichtwerkzeug relativ zur Schleifschnecke eine geradlinige Bewegung aus. Diese Relativbewegung erfolgt in einer Ebene, die durch die Drehachse des Abrichtwerkzeugs und durch eine Parallele zur Drehachse der Schleifschnecke definiert ist. In Fig. 3 der beiliegenden Zeichnungen ist die Parallele zur Drehachse der Schleifschnecke als Y-Achse bezeichnet, und die zu dieser unter dem sogenannten Achskreuzwinkel angeordnete Drehachse des zahnradartigen Abrichtwerkzeugs ist als Z-Achse bezeichnet. Beim Arbeiten im Tangentialverfahren erfolgt die Relativbewegung 19 des Abrichtwerkzeugs tangential zur Schleifschnecke d. h. parallel zur Y-Achse. Beim Arbeiten im Diagonalverfahren hat die geradlinige Relativbewegung 20 des Abrichtwerkzeugs eine Komponente in der Richtung Z. Da das Abrichtwerkzeug beim Arbeiten im Tangential- oder im Diagonalverfahren nur über einen geringen Teil seiner Breite genutzt wird, kommt es über seine Breite, d. h. in Axialrichtung zu einer ungleichmäßigen Abnutzung. Wenn das im Tangentialverfahren arbeitende Abrichtwerkzeug in einem bestimmten Bereich seiner Breite verschlissen ist, kann es in seiner Achsrichtung versetzt werden (Shiften), um bisher ungenutzte Partien der Werkzeugbreite zum Einsatz zu bringen. Da das Zahnprofil des Abrichtwerkzeugs fertigungsbedingt über seine Breite nicht immer exakt gleichförmig ist, kann ein solches Shiften des Abrichtwerkzeugs jedoch zur Folge haben, daß die mit unterschiedlichen Bereichen der Abrichtwerkzeugbreite abgerichteten Schleifschnecken eine unterschiedliche Profilqualität aufweisen. Derartige Profilabweichungen werden aber bei den nachfolgend mit diesen Schleifschnecken geschliffenen Zahnrädern reproduziert.

Beim Arbeiten im Diagonalverfahren gelangen unterschiedliche Breitenbereiche des Abrichtwerkzeugs mit der Schleifschnecke in Eingriff. Aus den bereits genannten Gründen ist es daher kaum möglich, eine Schleifschnecke mit einem über die gesamte Breite gleichförmigen Profil zu erhalten. Dieses Problem nimmt offensichtlich mit der Breite der Schleifschnecke zu. Um die Lebensdauer der Schleifschnecke zu verlängern, ist es bekannt, diese in einer Länge auszuführen, die ein vielfaches der beim Schleifen genutzten Eingriffsbreite beträgt. Dies eröffnet die Möglichkeit, die Schleifschnecke in Achsrichtung zu versetzen, d. h. zu shiften, um einen nicht abgenutzten Bereich mit dem zu schleifenden Zahnrad in Eingriff zu bringen. Nachdem aber aus dem vorstehend genannten Grund bei einer im Diagonalverfahren abgerichteten Schleifschnecke das Profil über deren Breite meistens nicht gleichförmig ist, fallen die mit unterschiedlichen Axialbereichen der Schleifschnecke geschliffenen Zahnräder ebenfalls ungleichförmig aus. Bei einem wiederholten Abrichten der Schleifschnecke im Tangential- oder im Diagonalverfahren kann daher nicht gewährleistet werden, daß die erhaltenen Endprodukte, d. h. die Zahnräder eine gleichförmige Profilqualität haben, unabhängig davon, mit welchem Breitenbereich der Schleifschnecke sie geschliffen werden bzw. wie oft die Schleifschnecke abgerichtet wurde.

Der Erfindung liegt die Aufgabe zugrunde, das gattungsgemäße Verfahren dahingehend weiterzubilden, daß die abgerichteten Schleifschnecken eine über die Breite gleichbleibende Profilqualität aufweisen, und daß das Profil jeder abgerichteten Schnecke über deren nutzbare Breite gleichförmig ist.

Die Lösung dieser Aufgabe ist im Anspruch 1 angegeben.

Dadurch, daß der Relativbewegung des zahnradartigen Abrichtwerkzeugs in Achsrichtung der Schleifschnecke eine periodisch alternierende Querbewegung in Achsrichtung des Abrichtwerkzeugs mit einer bestimmten Amplitude und einer bestimmten Wellenlänge überlagert wird, ist gewährleistet, daß jeder Bereich der Breite des Abrichtwerkzeugs mit der abzurichtenden Schleifschnecke in Eingriff gelangt. Die über die Breite des Abrichtzahnrades vorhandenen Profilabweichungen überlagern sich deshalb bzw. sie gleichen sich aus. Dies hat zur Folge, daß die abgerichtete Schleifschnecke über ihre nutzbare Breite ein gleichförmiges Profil hat, und daß dieses gleichförmige Profil auch bei wiederholtem Abrichten erhalten bleibt. Mit einer nach dem erfindungsgemäßen Verfahren abgerichteten Schleifschnecke lassen sich daher Werkstücke mit wiederholgenauer Qualität herstellen. Die geschliffenen Werkstücke weisen ein einheitliches Profil auf, unabhängig davon, mit welchem Breitenbereich der Schleifschnecke sie geschliffen wurden und unabhängig davon, wie oft die Schleifschnecke abgerichtet wurde.

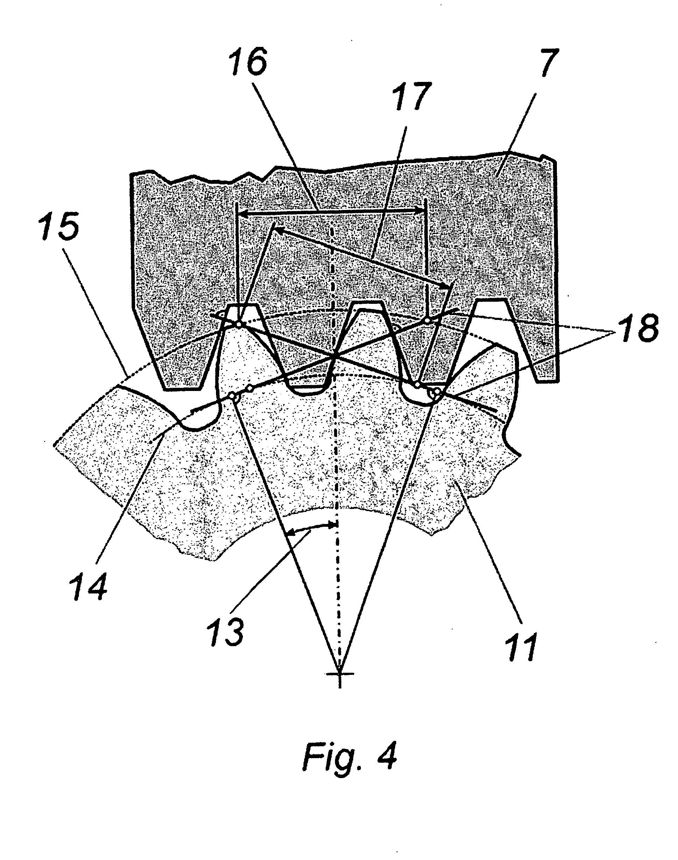

Die Wellenlänge der oszillierenden Relativbewegung ist vorzugsweise gleich oder kleiner als die bei der Bearbeitung eines Werkstücks genutzte Eingriffsbreite Lₚ (siehe Fig. 4) der Schleifschnecke und auch gleich oder kleiner als der Umfang des Abrichtzahnrades. Dadurch wird erreicht, daß alle Partien eines bestimmten Breitenbereichs des Abrichtzahnrades beim Abrichten einer genutzten Eingriffsbreite der Schleifschnecke zum Einsatz gelangen. Auf diese Weise kann über die Gesamtbreite der Schleifschnecke ein einheitliches Profil erzielt werden.

Zweckmäßigerweise ist die Amplitude der oszillierenden Relativbewegung geringfügig kleiner als die halbe Breite des Abrichtzahnrades. Dadurch wird erreicht, daß das Abrichtzahnrad über seine gesamte Breite genutzt wird, d. h. jeder Bereich seiner Breite gelangt mit der Schleifschnecke in Eingriff.

Das erfindungsgemäße Verfahren kann in vorteilhafter Weise auf einer herkömmlichen Zahnrad-Wälzschleifmaschine durchgeführt werden. Zu diesem Zweck ist vorgesehen, daß das zahnradartige Abrichtwerkzeug auf der Werkstückspindel aufgenommen wird, und daß für die Erzeugung der Abrichtbewegung zwischen Abrichtwerkzeug und Schleifschnecke die an der Maschine vorhandenen Achsen verwendet werden.

Die Erfindung wird nachfolgend anhand der Zeichnungen näher erläutert. Es zeigt.:
Fig. 1 in perspektivischer Darstellung eine Zahnrad-Wälzschleifmaschine nach dem Stand der Technik,
Fig. 2 eine schematische Darstellung der oszillierenden Bewegung eines zahnradartigen Abrichtwerkzeugs relativ zur Schleifschnecke,
Fig. 3 eine Darstellung der geradlinigen Bewegung eines zahnradartigen Abrichtwerkzeugs relativ zur Schleifschnecke beim herkömmlichen Tangential- bzw. Diagonalverfahren, und
Fig. 4 einen Stirnschnitt zur Erläuterung der beim Schleifen eines Zahnrades genutzten Eingriffsbreite der Schleifschnecke.

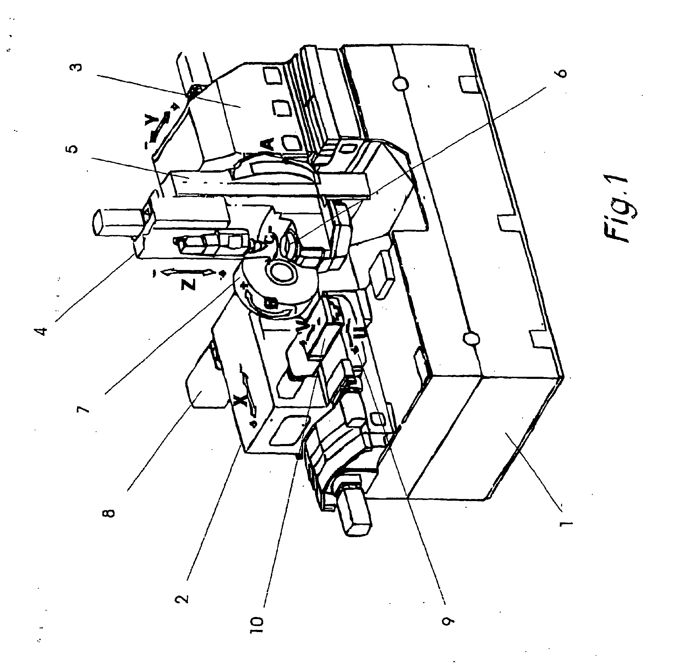

Die in Fig. 1 dargestellte Zahnrad-Wälzschleifmaschine besteht aus einem Bett 1, auf dem ein Radialschlitten 2 in Richtung X und ein Tangentialschlitten 3 in Richtung Y verschiebbar angeordnet sind. Mit dem Tangentialschlitten 3 ist ein Schwenkschlitten 5 zu einer Verdrehung in Richtung A schwenkbar verbunden. An dem Schwenkschlitten 5 ist ein Axialschlitten 4 in Richtung Z verschiebbar angeordnet. Der Axialschlitten 4 kann somit in den beiden Richtungen Y und Z verfahren und in Richtung A geschwenkt werden. In dem Axialschlitten 4 ist die Werkstückspindel 6 mit ihrem Antrieb untergebracht. Die Werkstückspindel 6 ist mit (nicht gezeigten) Spannmitteln zur Aufnahme eines Werkstücks versehen.

Der Radialschlitten 2 trägt einen Werkzeugantrieb 8 und eine (nicht dargestellte) Werkzeugspindel, auf der ein als zylindrische Schleifschnecke ausgebildetes Werkzeug 7 drehfest angeordnet ist. Der Radialschlitten 2 trägt ferner die Basis für die Aufnahme einer konventionellen Abrichtvorrichtung. Eine derartige Abrichteinrichtung besteht z. B. aus einer oder mehreren (nicht gezeigten) diamantbelegten Abrichtscheiben mit Lagerung und Antrieb. Die Achse der Abrichtscheibe (n) liegt vorteilhafterweise parallel zur Drehachse der Schleifschnecke 7. Die Abrichteinrichtung ist über einen U-Schlitten 9 in Richtung U (parallel zur Richtung X) und über einen V-Schlitten 10 in Richtung V (parallel zur Richtung Y) verschiebbar.

Bei dem erfindungsgemäßen Verfahren wird anstelle einer oder mehrerer Abrichtscheiben ein im wesentlichen zylindrisches Zahnrad benutzt, das auf der beim Abrichten wirksamen Oberfläche mit einem abrasivem Belag versehen ist. Dieses Abrichtzahnrad wird auf der Werkzeugspindel 6 drehfest angeordnet. Es kann beispielsweise anstelle des Werkstücks gespannt werden oder in die Aufspannvorrichtung des Werkstückes integriert sein. Das Abrichtzahnrad kann aber auch versetzt zum Werkstück auf der Werkstückspindel aufgenommen werden. Grundsätzlich ist es auch möglich, das Abrichtzahnrad an anderer Stelle relativ zur Schleifschnecke unterzubringen, was jedoch einen höheren konstruktiven Aufwand erforderlich macht.

Das Abrichtzahnrad kann praktisch einen beliebigen Schrägungswinkel aufweisen oder geradverzahnt sein. Das Abrichten kann bei der Schneckendrehzahl erfolgen, bei der die Schleifschnecke später die Werkstücke bearbeitet. Es bereitet keinerlei Schwierigkeiten, selbst mehrgängige Schleifschnecken bei sehr hoher Schneckendrehzahl sehr genau abzurichten bzw. zu profilieren. Alle für das Abrichten der Schleifschnecke erforderlichen Bewegungen können über die ohnehin vorhandenen Maschinenachsen ausgeführt werden. Bei diesem Abrichtprozeß wird die Maschine ähnlich wie eine Wälzfräsmaschine zum Schneckenradfräsen im Tangentialverfahren eingesetzt. Hierbei ist es lediglich notwendig, die technologischen Größen, wie Zustellung, Vorschub und Drehzahl der Schleifschnecke 7 auf die konkret vorliegende Abrichtaufgabe einzustellen.

Ein wesentliches Merkmal des erfindungsgemäßen Abrichtverfahrens besteht darin, daß der mit dem Tangentialschlitten 3 bewirkten Bewegung der Werkzeugspindel 6 mit dem Axialschlitten 4 eine periodisch alternierende Bewegung überlagert wird. Die Y-Richtung ist zur Drehachse der Schleifschnecke 7 parallel, und die Richtung Z ist zur Drehachse der Werkstückspindel 6 parallel. Der von den beiden Drehachsen gebildete Winkel wird als Achskreuzwinkel bezeichnet und weicht meistens von 90° ab.

Wie aus Fig. 2 hervorgeht, wird durch die Überlagerung der Bewegung des Tangentialschlittens 3 mit der alternierenden Bewegung des Axialschlittens 4 eine oszillierende Bewegung der Werkzeugspindel 6 und des auf dieser angeordneten Abrichtzahnrades bewirkt. Wie aus Fig. 2 ersichtlich, führt das Abrichtzahnrad relativ zur Schleifschnecke 7 eine oszillierende Bewegung aus. Diese oszillierende Bewegung kann eine Sinusfunktion sein, es ist aber auch jedes andere Wellenprofil oder periodische Profil denkbar.

Bei der späteren Bearbeitung eines Werkstücks gelangt nur ein bestimmter Bereich 17 (Fig. 4) der Gesamtbreite der Schleifschnecke mit dem Werkstück 11 in Eingriff. Dieser genutzte Bereich wird als Eingriffsbreite Lₚ bezeichnet. Die Wellenlänge λ der oszillierenden Bewegung der Werkstückspindel 6 ist so gewählt, daß sie gleich oder kleiner ist als die bei der Bearbeitung eines Werkstücks genutzte Eingriffsbreite Lₚ der Schleifschnecke 7. Die Amplitude Z₁/2 der oszillierenden Bewegung ist so gewählt, daß sie geringfügig kleiner ist als die halbe Breite des Abrichtzahnrades. Dadurch ist gewährleistet, daß beim Abrichten einer Schleifschnecke das hierzu benutze Abrichtzahnrad über seine gesamte Breite innerhalb einer Eingriffsbreite der Schleifschnecke in Eingriff gelangt. Vorzugsweise ist die Wellenlänge λ der Oszillationsbewegung wesentlich kleiner als die bei der Bearbeitung eines Werkstücks genutzte Eingriffsbreite Lₚ der Schleifschnecke 7 und auch kleiner als der Umfang des Abrichtzahnrades. Im Bereich einer Eingriffsbreite Lₚ der Schleifschnecke 7 gelangt das Abrichtzahnrad daher wiederholt über seine gesamte Breite mit der Schleifschnecke in Eingriff. Das hat zur Folge, daß über die Breite des Abrichtzahnrades vorhandene Qualitätsschwankungen ausgeglichen werden. Die Schleifschnecke 7 hat daher nach dem Abrichten über ihre gesamte nutzbare Breite eine einheitliche Profilqualität. Dieses einheitliche Profil der Schleifschnecke bleibt auch bei einem wiederholten Abrichten der Schleifschnecke erhalten. Die mit einer solchen erstmalig oder wiederholt abgerichteten Schleifschnecke erzeugten Werkstücke haben daher ebenfalls ein gleichförmiges Profil.

Die zur Durchführung des Verfahrens benutzte Zahnrad-Wälzschleifmaschine könnte abweichend von der gezeigten Ausführungsform auch so ausgebildet sein, daß die Bewegung in Richtung Y und Z nicht vom Zahnrad, sondern von der Schleifschnecke ausgeführt werden. In diesem Fall würde die Radialzustellung in Richtung X vom Zahnrad ausgeführt werden.

### Bezugszeichenliste:

- 1: Bett
- 2: Radialschlitten
- 3: Tangentialschlitten
- 4: Axialschlitten
- 5: Schwenkschlitten
- 6: Werkstückspindel
- 7: Werkzeug (Schleifschnecke)
- 8: Werkzeugantrieb
- 9: U- Schlitten
- 10: V- Schlitten
- 11: Zahnrad
- 13: Stirneingriffswinkel αₜ der Verzahnung
- 14: Grundkreisdurchmesser d_{b} der Verzahnung
- 15: Kopfkreisdurchmesser dₐ der Verzahnung
- 16: Eingriffsbreite Lₚ
- 17: Eingriffsstrecke g_{α}
- 18: Eingriffslinien der linken und rechten Flanken
- 19: Relativbewegung im Tangentialverfahren
- 20: Relativbewegung im Diagonalverfahren

## Patentansprüche

1. Verfahren zum Abrichten einer im wesentlichen zylindrischen Schleifschnecke auf einer zum kontinuierlichen Wälzschleifen im Diagonalverfahren geeigneten Maschine, bei dem als Abrichtwerkzeug ein im wesentlichen zylindrisches Zahnrad, das auf der beim Abrichten wirksamen Oberfläche mit einem abrasiven Belag versehen ist, mit der Schleifschnecke in Eingriff gebracht und relativ zur Schleifschnecke in Achsrichtung derselben bewegt wird, um die Flanken der Schleifschnecke zu profilieren, **dadurch gekennzeichnet, daß** der Relativbewegung des Abrichtzahnrades eine periodisch alternierende Bewegung in Achsrichtung des Abrichtzahnrades überlagert wird, wobei die Wellenlänge der resultierenden oszillierenden Relativbewegung gleich oder kleiner ist als die nutzbare Breite der Schleifschnecke in Achsrichtung.

2. Verfahren nach Anspruch 1, **dadurch gekennzeichnet, daß** die Wellenlänge der oszillierenden Relativbewegung gleich oder kleiner ist als die bei der Bearbeitung eines Werkstücks genutzte Eingriffsbreite Lₚ der Schleifschnecke.

3. Verfahren nach Anspruch 1 oder 2, **dadurch gekennzeichnet, daß** die Wellenlänge der oszillierenden Relativbewegung gleich oder kleiner ist als der Umfang des Abrichtzahnrades.

4. Verfahren nach Anspruch 1, 2 oder 3, **dadurch gekennzeichnet, daß** die Amplitude der oszillierenden Relativbewegung gleich oder kleiner ist als die halbe Breite des Abrichtzahnrades,

5. Verfahren nach Anspruch 4, **dadurch gekennzeichnet, daß** die Amplitude der oszillierenden Relativbewegung geringfügig kleiner ist als die halbe Breite des Abrichtzahnrades.

6. Verfahren nach einem der Ansprüche 1 bis 5, **dadurch gekennzeichnet, daß** das Abrichtzahnrades auf der Werkstückspindel aufgenommen wird und für die Erzeugung der oszillierenden Relativbewegung zwischen Abrichtzahnrades und Schleifschnecke die an der Maschine vorhandenen Achsen verwendet werden.

## Claims

1. A method of dressing a substantially cylindrical grinding worm on a machine suitable for continual roller grinding in a diagonal process wherein as a dressing tool a substantially cylindrical toothed wheel, which is provided with an abrasive coating on the surface which is effective during dressing, is engaged with the grinding worm and is moved relative to the grinding worm in the axial direction of the latter in order to profile the sides of the grinding worm, **characterised in that** the relative movement of the toothed dressing wheel is superimposed with a periodically alternating movement in the axial direction of the toothed dressing wheel, the wavelength of the resulting oscillating relative movement being equal to or smaller than the useable width of the grinding worm in the axial direction.

2. The method according to Claim 1, **characterised in that** the wavelength of the oscillating relative movement is equal to or smaller than the engagement width Lₚ of the grinding worm used when machining a workpiece.

3. The method according to Claim 1 or 2, **characterised in that** the wavelength of the oscillating relative movement is equal to or smaller than the circumference of the toothed dressing wheel.

4. The method according to Claim 1, 2 or 3, **characterised in that** the amplitude of the oscillating relative movement is equal to or smaller than half the width of the toothed dressing wheel.

5. The method according to Claim 4, **characterised in that** the amplitude of the oscillating relative movement is slightly less than half the width of the toothed dressing wheel.

6. The method according to any of Claims 1 to 5, **characterised in that** the toothed dressing wheel is held on the workpiece spindle and in order to produce the oscillating relative movement between the toothed dressing wheel and the grinding worm the axes provided on the machine are used.

## Revendications

1. Procédé pour effectuer le dressage d'une vis sans fin de rectification essentiellement cylindrique sur une machine prévue pour effectuer en continu une rectification selon le procédé en diagonale, l'outil de dressage étant constitué par un pignon essentiellement cylindrique qui, lors du dressage a sa face garnie d'un revêtement abrasif, et qui est amené en prise avec la vis sans fin de rectification en se déplaçant par rapport à celle-ci selon la direction axiale de cette vis, de manière à profiler les flancs de la vis, ce procédé étant **caractérisé en ce qu'**au mouvement relatif du pignon de dressage est superposé un mouvement alternatif effectué selon la direction axiale de ce pignon, la longueur d'onde du mouvement d'oscillation en résultant étant égale ou inférieure à la largeur utilisable de la vis de rectification en direction axiale.

2. Procédé selon la revendication 1, **caractérisé en ce que** la longueur d'onde du mouvement relatif d'oscillation est égale ou inférieure à la largeur de prise de la vis sans fin utilisée pendant l'usinage d'une pièce.

3. Procédé selon la revendication 1 ou 2, **caractérisé en ce que** la longueur d'onde du mouvement relatif d'oscillation est égale ou inférieure à la périphérie du pignon de dressage.

4. Procédé selon la revendication 1, 2 ou 3, **caractérisé en ce que** la longueur d'onde du mouvement relatif d'oscillation est égale ou inférieure à la moitié de la largeur du pignon de dressage.

5. Procédé selon la revendication 4, **caractérisé en ce que** la longueur d'onde du mouvement relatif d'oscillation est un peu inférieure à la moitié de la largeur du pignon de dressage..

6. Procédé selon une des revendications 1 à 5, **caractérisé en ce que** le pignon de dressage est monté sur la broche porte-pièce et que, pour produire le mouvement relatif d'oscillation entre le pignon de dressage et la vis sans fin de rectification, les axes dont dispose la machine sont utilisés.
